(19) Europäisches Patentamt

European Patent Office

Office européen des brevets

(11) EP 1 701 139 A1

(12) EUROPEAN PATENT APPLICATION
published in accordance with Art. 158(3) EPC

(43) Date of publication:
13.09.2006 Bulletin 2006/37

(51) Int Cl.:
*G01F 1/66* (2006.01)

(21) Application number: 04807788.7

(22) Date of filing: 24.12.2004

(86) International application number:
PCT/JP2004/019432

(87) International publication number:
WO 2005/064287 (14.07.2005 Gazette 2005/28)

(84) Designated Contracting States:
AT BE BG CH CY CZ DE DK EE ES FI FR GB GR HU IE IS IT LI LT LU MC NL PL PT RO SE SI SK TR

(30) Priority: 26.12.2003 JP 2003435909

(71) Applicant: THE TOKYO ELECTRIC POWER COMPANY INCORPORATED
Tokyo 100-8560 (JP)

(72) Inventors:
• MORI, Michitsugu
Chiyoda-ku,
Tokyo 1008560 (JP)
• TEZUKA, Kenichi,
The Tokyo Electric Power Comp Inc
Tokyo 1008560 (JP)
• TEZUKA, Hideaki,
The Tokyo Electric Power CompInc
Tokyo 1008560 (JP)

(74) Representative: HOFFMANN EITLE
Patent- und Rechtsanwälte
Arabellastraße 4
D-81925 München (DE)

(54) **ULTRASONIC FLOW METER, FLOW MEASUREMENT METHOD, AND COMPUTER PROGRAM**

(57) [OBJECT]

An object of the present invention is to provide a technology to measure a flow rate more accurately by reducing an identification error when identifying the inner wall position from calculation result of flow velocity distribution in an ultrasonic flowmeter.

[ORGANIZATION]

An ultrasonic flowmeter includes the fluid velocity distribution measuring means comprising: a graph output means for outputting a flow velocity distribution graph displaying the flow velocity in two axes of positions in the inner diameter direction of the fluid pipe relating to the measuring line and fluid velocities corresponding to the inner diameter direction; and an inner wall position calculating means for calculating the position of the inner wall with respect to the axis in the inner diameter direction; in which the flow rate operation means measures the flow rate of a fluid to be measured by integral operation based on the inner wall position calculated by the inner wall position calculating means.

FIG. 2

**Description**

Technical Field

The present invention relates to an ultrasonic flowmeter possible to instantaneously measure a flow rate of a fluid to be measured time-dependently from flow velocity distribution in a measurement region and a technology relating to the above-described flowmeter

Background Art.

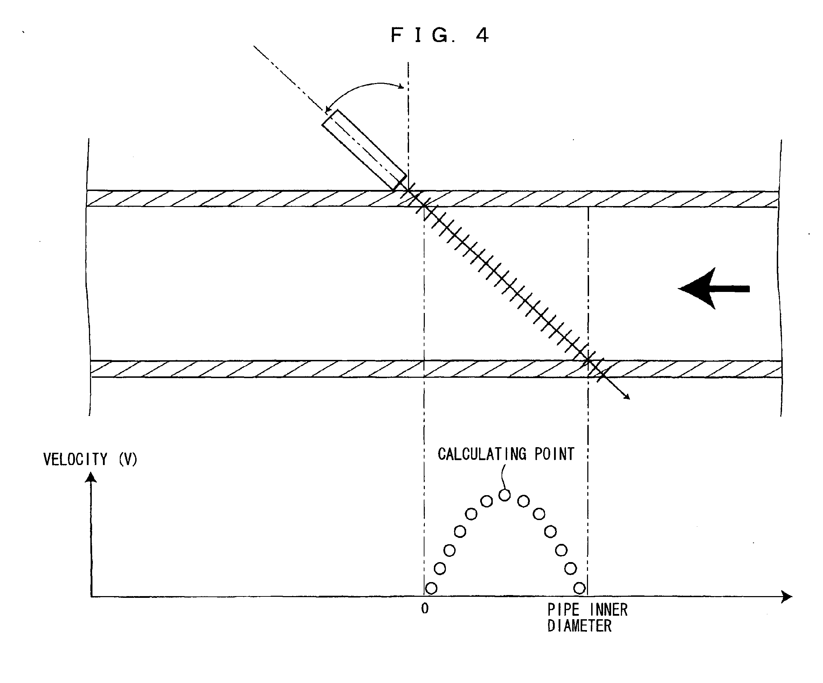

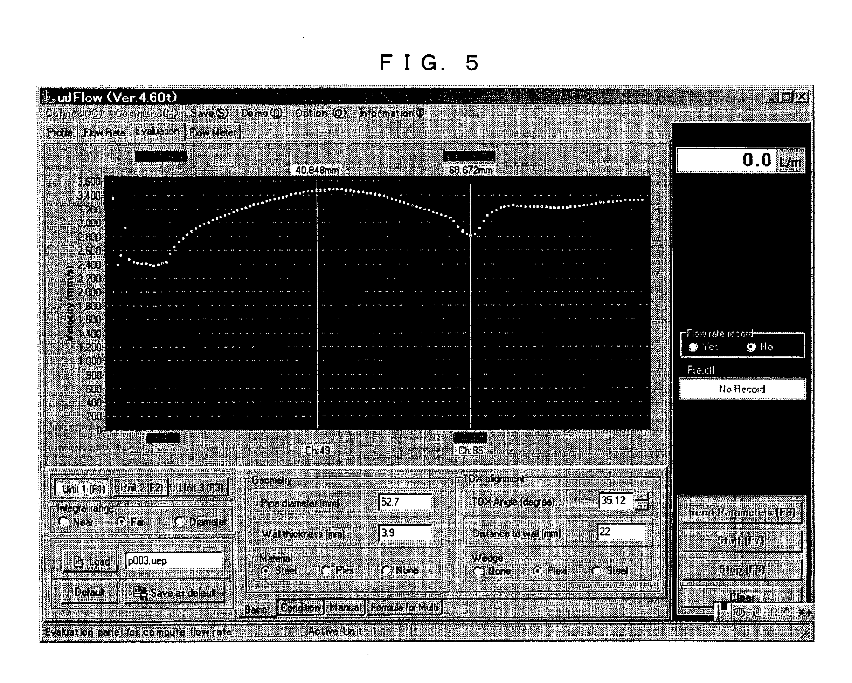

Various technologies have been proposed for a Doppler ultrasonic flowmeter which can measure a flow rate in a non-contact manner (for instance, Japanese Patent Application Laid-open No. 2000-97742)
Patent Document 1: Japanese Patent Application Laid-open No. 2000-97742
The above-described technology will be explained concretely with reference to FIG. 4 and FIG. 5. The Doppler ultrasonic flowmeter disclosed in the above-described document measures a flow rate of a fluid to be measured provided with: an ultrasonic transmitter for launching ultrasonic pulses having a predetermined frequency from an ultrasonic transducer into the fluid to be measured in a pipe for a fluid (for instance water) along a measuring line; a flow velocity distribution measuring means for measuring flow velocity distribution of the fluid to be measured in a measurement region by receiving ultrasonic echoes reflected from the measurement region among the ultrasonic pulses incident into the fluid to be measured, and a flow rate operation means for calculating the flow rate of the fluid to be measured in the measurement region based on the flow velocity distribution of the fluid to be measured.
FIG. 4 is a view showing a state in which the measuring line is divided and calculation of flow velocity is carried out as a model.
This technology is a method to measure the velocity distribution of a fluid to be measured flowing in a pipe, and is excellent in responsivity to the flow rate fluctuating with respect to time during a transitory time. The technology enables the efficient measurement of the flow rate of a fluid to be measured, precisely and instantly even immediately at a location where the flow of fluid is not yet sufficiently developed or a location where a three dimensional flow occurs such as a bent pipe, for instance, an elbow pipe, or a reverse pipe in a letter U shape. This technology has a characteristic such that it enables precise measurement even without "a flow rate correction coefficient" deduced from experimental values or empirical values, when compared with an ultrasonic flowmeter provided before, and, therefore, is valued highly.
FIG. 5 shows a state of calculation of actual flow velocity, different from FIG. 4 showing the calculation as a model. The method is to calculate the position of the inner surface from a pass through time from the end surface of a transducer to the inside of an wedge, a pass through time inside the pipe, and a pass through time inside non measurement fluid, using respective geometric shapes and the velocity of sound.
As clear from the drawing, since the flow velocity varies greatly at a point of measurement close to the inner wall of the fluid pipe, any error in specifying the inner wall position may lead to a great error in final calculation of the flow rate.
Individual differences in transducers, and individual differences in ultrasonic receiving circuits (individual difference in delay due to the use of a condenser or the like) are assumed as a factor making the calculation of the inner wall position in the fluid pipe (precise calculation of distance from the transducer) difficult. However, it is not practical to solve the disadvantage by clarifying reasons for existence of variation, or by removing causes of the variation.

Disclosure of the Invention

An object of the present invention is to provide a technology to measure a flow rate more accurately by reducing an identification error when identifying the inner wall position from calculation result of flow velocity distribution in an ultrasonic flowmeter.
The objects of the present invention according to claims 1 to 3 are to provide an ultrasonic flowmeter to measure a flow rate more accurately by reducing an identification error when identifying the inner wall position from calculation result of flow velocity distribution in an ultrasonic flowmeter.
The objects of the present invention according to claims 4 and 5 are to provide a flow rate measuring method to measure a flow rate more accurately by reducing an identification error when identifying the inner wall position from calculation result of flow velocity distribution in an ultrasonic flowmeter.
The objects of the present invention according to claims 6 and 7 are to provide a computer program product to cause the ultrasonic flowmeter to execute measurement of a flow rate more accurately by reducing an identification error when identifying the inner wall position from calculation result of flow velocity distribution in an ultrasonic flowmeter.

(claim 1)

The invention described in claim 1 relates to an ultrasonic flowmeter to measure a flow rate of a fluid to be measured including: an ultrasonic transmitter for launching ultrasonic pulses of a predetermined frequency into the fluid to be measured in a fluid pipe from an ultrasonic transducer along a measuring line; a flow velocity distribution measuring means for measuring flow velocity distribution of the fluid to be measured in a measurement region by receiving ultrasonic echoes reflected from the measurement region among the ultrasonic pulses incident into the fluid to be measured; and a flow rate operation means for calculating a flow rate of the fluid to be measured in the measurement region based on the flow velocity distribution of the fluid to be measured,

in which the flow velocity distribution measuring means includes; a graph output means for outputting a flow velocity distribution graph displaying the flow velocity distribution in two axes of positions in the inner diameter direction of the fluid pipe relating to the measuring line and fluid velocities corresponding to the inner diameter direction; and an inner wall position calculating means for calculating the position of the inner wall with respect to the axis in the inner diameter direction by calculating its inflection point from the flow velocity distribution graph outputted by the graph output means, and

in which the flow rate operation means measures a flow rate of the fluid to be measured by integral operation based on the inner wall position calculated by the inner wall position calculating means.

(Explanation of Terms)

The ultrasonic flowmeter includes a usual Doppler ultrasonic flowmeter and an ultrasonic flowmeter using a correlation method. The ultrasonic flowmeter using the correlation method is an ultrasonic flowmeter disclosed in, for instance, Japanese Patent Application Laid-open No. 2003-344131.

Both measure a flow rate of a fluid to be measured with means including an ultrasonic transmitter for launching ultrasonic pulses of a predetermined frequency into a fluid to be measured in a fluid pipe from an ultrasonic transducer along a measuring line; a flow velocity distribution measuring means for measuring flow velocity distribution of the fluid to be measured in a measurement region by receiving ultrasonic echoes reflected from the measurement region among the ultrasonic pulses incident into the fluid to be measured; and the flow rate operation means for calculating a flow rate of the fluid to be measured in the measurement region based on the flow velocity distribution of the fluid to be measured.

The "flow rate operation means" is a means for performing the following operation, when m(t) is a flow rate

[Equation 1]

$$m(t) = \rho \int v(x \cdot t) \cdot dA \qquad \cdots\cdots(1)$$

where ρ: density of the fluid to be measure
v(x t): a velocity component (in the x direction) at the time t

From the above equation (1), the flow rate m(t) in the elapsed time t during which the fluid flows in a fluid pipe can be rewritten as follows.

[Equation 2]

$$m(t) = \rho \iint vx(r \cdot \theta \cdot t) \cdot r \cdot dr \cdot d\theta \qquad \cdots\cdots(2)$$

where vx(r·θ· t): the velocity component in the (direction of the pipe axis at a distance r and angle θ from the center of the pipe cross section at the time t.

It should be noted that if the flow of the fluid to be measured flowing in the pipe is a flow along the pipe axis, then it is permissible to neglect the flow in the radial direction or at the angle of θ, namely vr and vθ, vx >>vr = vθ, and the flow rate measurement can be simplified and the flow rate is expressed by the following equation.

[Equation 3]

$$m(t) = \sum_{i}^{N} \cdot \frac{2\pi}{N} \int_{R}^{R} \{vx(r \cdot \theta i \cdot t) / \sin\alpha\} \cdot r \cdot dr \qquad \cdots\cdots(3)$$

where $\alpha$ is an incident angle of the ultrasonic generated from the ultrasonic transducer, namely, an angle against the perpendicular line to the pipe wall.

Various mathematical methods may be used as "calculation of an inflection point" by "the inner wall position calculating means". For instance, flow velocity is made to be a quadric curve by a method such as interpolation or the like, which is differentiated to find a zero point. The inflection point can be calculated based on the zero point.

(operation)

In the flow velocity distribution measuring means, the graph output means outputs a flow velocity distribution graph displaying a flow velocity distribution in two axes of positions in the inner diameter direction of a fluid pipe relating to the measuring line, and the flow velocity corresponding to the inner diameter direction. From the flow velocity distribution graph outputted by the graph output means the inner wall position calculating means calculates an inflection point, so that the inner wall position with respect to the axis in the inner diameter direction on the graph is calculated. The flow rate operation means performs integral operation based on the inner wall positions calculated by the inner wall position calculating means to measure the flow rate of the fluid to be measured.
By identification of the inner wall position precisely, it is possible to reduce a final calculation error of the flow rate.

(claim 2)

The invention described in claim 2 defines the ultrasonic flowmeter according to claim 1.
In other words, the flow velocity distribution measuring means includes a fine adjustment input data receiver which enables to finely adjust the inner wall position calculated by the inner wall position calculating means by means of manual input.
This is to provide "a fine adjustment input data receiver" as an empirical correction means to the result of automatic calculation by the inner wall position calculating means. For instance, a function to output the inner wall position calculated by the inner wall position calculating means on the screen as the vertical axis, and to move the vertical axis to right and left with a cursor key and to fix it with a return key after the movement, can be also included.

(operation)

This invention enables further correcting of the result of the automatic calculation by the inner wall position calculating means from empirical judgment. By providing this function, it becomes possible to identify an accurate inner wall position based on experience, which contributes to reduced final calculation errors in the flow rate.

(claim 3)

The invention described in claim 3 takes the following configuration.
In other words, the flow velocity distribution measuring means includes: a graph output means for outputting a flow velocity distribution graph displaying the flow velocity distribution in two axes of positions in the inner diameter direction of the fluid pipe relating to the measuring line and the fluid velocity corresponding to the inner diameter direction; a manual input data receiver for receiving manual input data regarding an inner wall position with respect to the axis in the inner diameter direction; and an inner wall position calculating means for calculating the inner wall position. The flow rate operation means measures a flow rate of the fluid to be measured by integral operation based on the inner wall position calculated by the inner wall position calculating means.
Claim 3 differs from claims 1 and 2, in that calculation of the inner wall position is not automatically performed, and operation of the flow rate is performed by accepting manual input of the inner wall position.
The invention described in claim 4 relates to a method of flow rate measurement using an ultrasonic flowmeter measuring the flow rate of the fluid to be measured including: an ultrasonic transmitter for launching ultrasonic pulses of a predetermined frequency into a fluid to be measured in a fluid pipe from an ultrasonic transducer along a measuring line; a flow velocity distribution measuring means for measuring flow velocity distribution of the fluid to be measured in a measurement region by receiving ultrasonic echoes reflected from the measurement region among the ultrasonic pulses incident into the fluid to be measured; and a flow rate operation means for calculating a flow rate of the fluid to be measured in the measurement region based on the flow velocity distribution of the fluid to be measured.

In other words, this is a method of flow rate measurement executing the steps of: graph outputting to output a flow velocity distribution graph displaying the flow velocity distribution in two axes of positions in the inner diameter direction of the fluid pipe relating to the measuring line and fluid velocities corresponding to the inner diameter direction by the flow velocity distribution measuring means; inner wall position calculating to calculate the position of the inner wall with respect to the axis in the inner diameter direction; and flow rate operating to calculate the flow rate of the fluid to be measured by integral operation based on the inner wall position calculated from the inner wall position calculation step by the flow rate operation means.

(claim 5)

The invention described in claim 5 also relates to a method of flow rate measurement using an ultrasonic flowmeter measuring the flow rate of a fluid to be measured including: an ultrasonic transmitter for launching ultrasonic pulses of a predetermined frequency into a fluid to be measured in fluid pipe from an ultrasonic transducer along a measuring line; a flow velocity distribution measuring means for measuring flow velocity distribution of the fluid to be measured in a measurement region by receiving ultrasonic echoes reflected from the measurement region among the ultrasonic pulses incident into the fluid to be measured; and a flow rate operation means for calculating a flow rate of the fluid to be measured in the measurement region based on the flow velocity distribution of the fluid to be measured.

In other words, this is a method of flow rate measurement executing the steps of: graph outputting to output a flow velocity distribution graph displaying the flow velocity distribution in two axes of positions in the inner diameter direction of the fluid pipe relating to the measuring line and fluid velocities corresponding to the inner diameter direction by the flow velocity distribution measuring means; manual input data receiving to receive manual input data regarding the inner wall position with respect to the axis in the inner diameter direction; inner wall position calculating to calculate position of the inner wall with respect to the axis in the diameter direction based on the manual input data accepted at the manual input data receiving step; and flow rate operating to calculate the flow rate of the fluid to be measured by integral operation based on the inner wall position calculated at the inner wall position calculation step by the flow rate operation means.

(Claim 6)

The invention described in claim 6 relates to a program product to control an ultrasonic flowmeter measuring the flow rate of a fluid to be measured including: an ultrasonic transmitter for launching ultrasonic pulses of a predetermined frequency into a fluid to be measured in a fluid pipe from an ultrasonic transducer along a measuring line; a flow velocity distribution measuring means for measuring flow velocity distribution of the fluid to be measured in a measurement region by receiving ultrasonic echoes reflected from the measurement region among the ultrasonic pulses incident into the fluid to be measured; and a flow rate operation means for calculating a flow rate of the fluid to be measured in the measurement region based on the flow velocity distribution of the fluid to be measured.

The program product is a computer program product making the ultrasonic flowmeter execute the steps of: graph outputting to output a flow velocity distribution graph displaying the flow velocity distribution in two axes of positions in the inner diameter direction of the fluid pipe relating to the measuring line and fluid velocities corresponding to the inner diameter direction by the flow velocity distribution measuring means; inner wall position calculating to calculate the inner wall position with respect to the axis in the inner diameter direction by calculating the inflection point from the flow velocity distribution graph outputted at the graph outputting step; and flow rate operating to calculate the flow rate of the fluid to be measured by integral operation based on the inner wall position calculated at the inner wall position calculation step.

(Claim 7)

The invention described in claim 7 also relates to a program product to control an ultrasonic flowmeter to measure the flow rate of a fluid to be measured including: an ultrasonic transmitter for launching ultrasonic pulses of a predetermined frequency into a fluid to be measured in fluid pipe from an ultrasonic transducer along a measuring line; a flow velocity distribution measuring means for measuring flow velocity distribution of the fluid to be measured in a measurement region by receiving ultrasonic echoes reflected from the measurement region among the ultrasonic pulses incident into the fluid to be measured; and a flow rate operation means for calculating a flow rate of the fluid to be measured in the measurement region based on the flow velocity distribution of the fluid to be measured.

The program product is a computer program product making the ultrasonic flowmeter execute the steps of: graph outputting to output a flow velocity distribution graph displaying the flow velocity distribution in two axes of positions in the inner diameter direction of the fluid pipe relating to the measuring line and fluid velocities corresponding to the inner diameter direction by the flow velocity distribution measuring means; manual input data receiving to receive manual input data regarding the inner wall position with respect to the axis in the inner diameter direction; inner wall position calculating to calculate the position of the inner wall; and operating the flow rate to calculate the flow rate of the fluid to be measured by integral operation based on the inner wall position calculated at the inner wall position calculation step.

It is possible to provide the computer program product according to claims 6 or 7 stored in a storage medium. Here, the term "storage medium" indicates a medium which can hold a program product which cannot occupy a space by itself, and is, for instance, a flexible disk, a hard disk, a CD-R, an MO (magneto-optic disk), a DVD-R, and so on.

It is also possible to transmit a program product according to the present invention to other computers via communication lines from a computer stored the program product.

Furthermore, it is still possible to provide the ultrasonic flowmeter functioning as that in claim 1 by preinstalling or downloading, to an ultrasonic flowmeter provided whith a general-purpose computer, a program accomplishing the above described means.

Effect of the Invention

According to the inventions described from claims 1 to 3, in an ultrasonic flowmeter, it becomes possible to provide an ultrasonic flowmeter which can measure a flow rate more accurately by reducing an identification error when identifying the inner wall position from calculation result of flow velocity distribution.

According to the inventions described from claims 4 to 5, in an ultrasonic flowmeter, it becomes possible to provide a method of flow rate measurement which can measure a flow rate more accurately by reducing identification errors when identifying the inner wall position from calculation results of flow velocity distribution.

According to the inventions described from claims 6 to 7, in an ultrasonic flowmeter, it becomes possible to provide a computer program product to make an ultrasonic flowmeter execute measurement of a flow rate more accurately by reducing identification errors when identifying the inner wall position from calculation results of the flow velocity distribution.

Best Mode for Carrying out the Invention

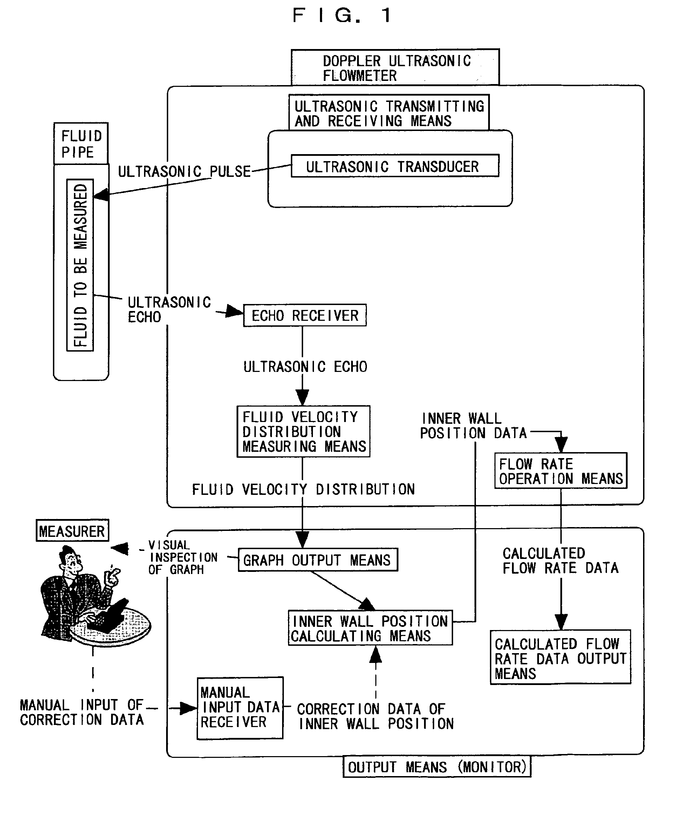

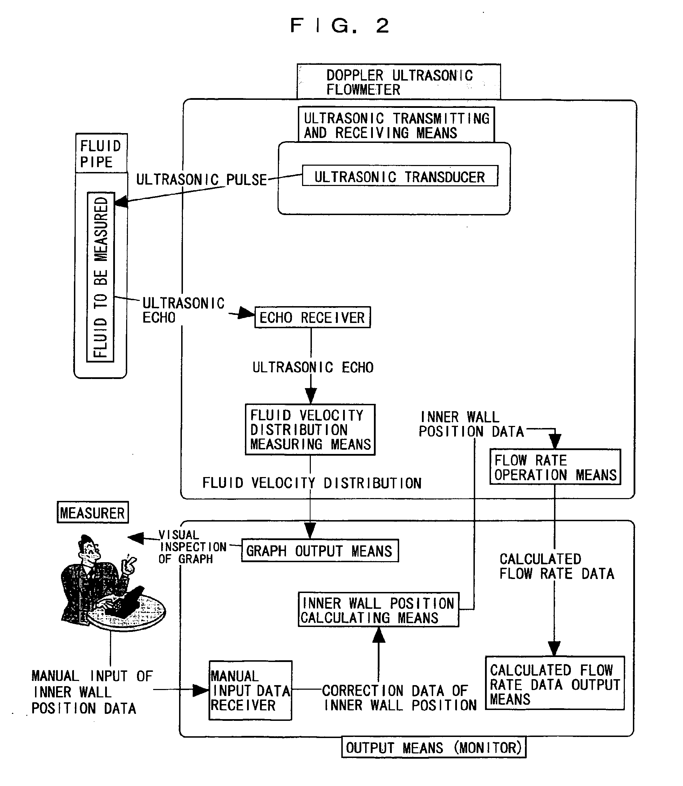

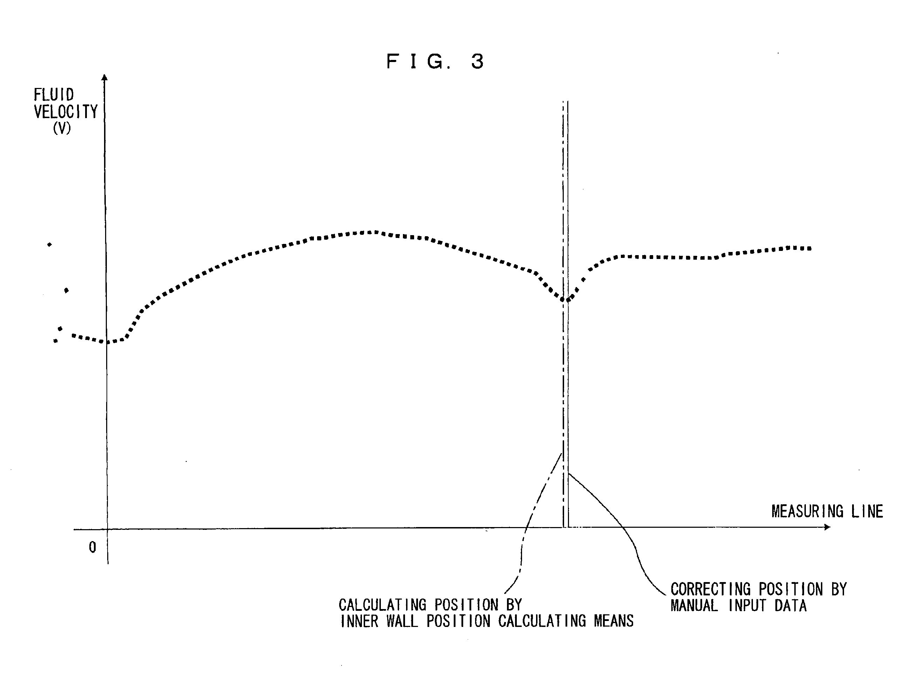

The present invention will be explained further in details based on embodiments and drawings hereinafter. The drawings used here are from FIGs 1 to 3 and FIG. 5. FIGs. 1 and 2 are views explaining the embodiments conceptually. FIG. 3 is an extraction of the flow velocity distribution outputted in FIG. 5 and shows a main portion of the embodiment in FIG. 1.

(FIG. 1)

FIG. 1 shows an ultrasonic transmitting and receiving means (transducer) serving also a receiver to receive ultrasonic echoes reflected from a measurement region of an ultrasonic pulse incident into a fluid to be measured in an ultrasonic flowmeter to measure the flow rate of the fluid pipe through which fluid to be measured is flowing.

The transducer also serves as a flow velocity distribution measuring means which receives ultrasonic echoes reflected from a measurement region of an ultrasonic pulse incident into a fluid to be measured, and measures a flow velocity distribution of the fluid to be measured in the measurement region. The transducer is connected to a computer such as a micro computer, a CPU, an MPU or the like as a flow rate operation means which seeks for a flow rate of the fluid to be measured time dependently based on the flow velocity distribution, and a display device (illustrated as "an output means(monitor)" in FIG. 1) which can display the output from the computer in time series.

An amplifier for vibration as a signal generator to vibrate the transducer is provided to the transducer, and a pulse electric signal having a prescribed reference frequency is inputted from the amplifier for vibration to the ultrasonic transducer. An ultrasonic pulse having a required reference frequency is generated by application of the pulse electric signal along the measuring line. The ultrasonic pulse is a straight type beam having a pulse width of about 5 mm with hardly any expansion. This is the same as explained in FIG. 4.

In the transducer, the generated ultrasonic pulse hits on and is reflected by a reflecting body (for instance, a bubble) in the fluid to be measured in a fluid pipe to become ultrasonic echoes, which are received by an echo receiving means functioned by the transducer also, so that they are converted to echo electric signals by the reflection wave receivers. The echo electric signal is digitized through an AD converter after amplified with an amplifier. Then, the digitized digital echo signal is inputted into the flow velocity distribution measuring means provided with a flow velocity distribution measurement circuit.

In the flow velocity distribution measuring means, an electric signal having the reference frequency from the amplifier for vibration is digitized and inputted, the flow velocity distribution measuring means measures flow velocity using change in flow velocity based on a Doppler shift from the frequency difference between both signals or using cross-correlation values of both signals, and the flow velocity distribution in the measurement area along the measuring line is calculated. By calibrating the flow velocity distribution in the measurement region with an incident angle $\alpha$ of the ultrasonic, it is possible to calculate the flow velocity distribution in a cross section of the fluid pipe. The calculated flow velocity distribution is outputted on a monitor as a graph.

When displayed as a graph, a temporary inner wall position is also outputted by "the inner wall position calculating means". The "temporary inner wall position" is calculated based on a point taken as zero which is obtained by, for instance, differentiating the flow velocity distribution as a quadric curve by a method such as interpolation or the like. Note that for calculation of the "temporary inner wall position", it is possible to combine various mathematical methods or use individual methods according to the case.

A measurer who visually confirms a graph on the monitor inputs correction data for the inner wall position using a manual input data receiver (for instance, a cursor key of the key board connected to the monitor). Concretely, as shown in FIG. 3, a line showing the inner wall position is moved to right and left using a cursor key or the like.

It is needless to say that if a measurer finds no necessity of correction, input of correction data is not required. However, it is necessary to input the inner wall position calculating means to the effect that no input of correction data is necessary.

Using the measured inner wall position data, the flow rate operation means measures a flow rate of the fluid to be measured. Then, the calculated flow rate is again outputted on the monitor.

Since the ultrasonic flowmeter according to the present embodiment can measure time-dependent flow velocity distribution in the measurement region in time dependence, it is possible to measure the flow rate of the fluid to be measured accurately and precisely irrespective of a steady state or non-steady state. Furthermore, since a temporary inner wall position is automatically calculated by the inner wall position calculating means, and a correction based on measurer's experience can be added, it contributes to the limiting of measurement errors accompanying calculation of the inner wall position.

FIG. 2

The embodiment shown in FIG. 2 can omit automatic calculation in "the inner wall position calculating means" used in FIG. 1, and measures an inner wall position by data inputted by the measurer. It can manage cases where measurement points become so small in number in some circumstances that flow velocity distribution cannot be plotted as a continuous curve even by interpolation or the like. It should be noted that in the present embodiment, it is inevitably necessary for data for the inner wall position to be imputed by measurer. Otherwise, final flow rate calculation cannot be performed.

Furthermore, omitting the automatic calculation has the merit of simplifying an entire device, and contributing to cost reduction.

In the embodiments described above, referring mainly to FIG. 3, explanation was made about the right side (farther point on the measuring line) of the inner wall position. A zero point is also automatically calculated, and correction by measurers can be performed.

Industrial Availability

The present invention can be adopted not only to the Doppler ultrasonic flowmeter but also to a flowmeter of an ordinary ultrasonic flowmeter.

It is used not only in the manufacture of an ultrasonic flowmeter but also in the installment and maintenance of an ultrasonic flowmeter.

Brief Description of Drawings

FIG. 1 is a conceptual diagram showing a first embodiment;
FIG. 2 is a conceptual diagram showing a second embodiment;
FIG. 3 is a conceptual diagram showing a third embodiment;
FIG. 4 is a conceptual diagram showing a prior art; and
FIG. 5 is a view showing a manner to output flow velocity distribution on a monitor.

**Claims**

1. An ultrasonic flowmeter to measure a flow rate of a fluid to be measured, comprising:

an ultrasonic transmitter for launching ultrasonic pulses of a predetermined frequency into the fluid to be measured in a fluid pipe from an ultrasonic transducer along a measuring line;
a flow velocity distribution measuring means for measuring flow velocity distribution of the fluid to be measured in a measurement region by receiving ultrasonic echoes reflected from the measurement region among the ultrasonic pulses incident into the fluid to be measured; and

a flow rate operation means for calculating a flow rate of the fluid to be measured in the measurement region based on the flow velocity distribution of said fluid to be measured,

wherein said flow velocity distribution measuring means comprises: a graph output means for outputting a flow velocity distribution graph displaying the flow velocity distribution in two axes of positions in the inner diameter direction of the fluid pipe relating to the measuring line and fluid velocities corresponding to the inner diameter direction; and

an inner wall position calculating means for calculating the position of the inner wall with respect to the axis in the inner diameter direction by calculating its inflection point from the flow velocity distribution graph outputted by the graph output means, and

wherein said flow rate operation means measures a flow rate of the fluid to be measured by integral operation based on the inner wall position calculated by said inner wall position calculating means.

2. The ultrasonic flowmeter according to claim 1, wherein said flow velocity distribution measuring means includes a fine adjustment input data receiver which enables to finely adjust the inner wall position calculated by the inner wall position calculating means by means of manual input.

3. An ultrasonic flowmeter to measure a flow rate of a fluid to be measured, comprising:

an ultrasonic transmitter for launching ultrasonic pulses of a predetermined frequency into the fluid to be measured in a fluid pipe from an ultrasonic transducer along a measuring line;

a flow velocity distribution measuring means for measuring flow velocity distribution of the fluid to be measured in a measurement region by receiving ultrasonic echoes reflected from the measurement region among the ultrasonic pulses incident into the fluid to be measured; and

a flow rate operation means for calculating a flow rate of the fluid to be measured in the measurement region based on the flow velocity distribution of said fluid to be measured,

wherein said flow velocity distribution measuring means comprises:

a graph output means for outputting a flow velocity distribution graph displaying the flow velocity distribution in two axes of positions in the inner diameter direction of the fluid pipe relating to the measuring line and the fluid velocity corresponding to the inner diameter direction;

a manual input data receiver for receiving manual input data regarding an inner wall position with respect to the axis in the inner diameter direction; and

an inner wall position calculating means for calculating the inner wall position with respect to the axis in the inner diameter direction based on the manual input data received by the manual input data receiver,

wherein said flow rate operation means measures a flow rate of the fluid to be measured by integral operation based on the inner wall position calculated by said inner wall position calculating means.

4. A method of flow rate measurement using an ultrasonic flowmeter measuring a flow rate of a fluid to be measured, comprising:

an ultrasonic transmitter for launching ultrasonic pulses of a predetermined frequency into the fluid to be measured in a fluid pipe from an ultrasonic transducer along a measuring line;

a flow velocity distribution measuring means for measuring flow velocity distribution of the fluid to be measured in a measurement region by receiving ultrasonic echoes reflected from the measurement region among the ultrasonic pulses incident into the fluid to be measured; and

a flow rate operation means for calculating a flow rate of the fluid to be measured in the measurement region based on the flow velocity distribution of said fluid to be measured, and

by said flow velocity distribution measuring means, the method comprising the steps of:

graph outputting to output a flow velocity distribution graph displaying the flow velocity in two axes of positions in the inner diameter direction of the fluid pipe relating to the measuring line and fluid velocities corresponding to the inner diameter direction;

inner wall position calculating to calculate the position of the inner wall with respect to the axis in the inner diameter direction; and

flow rate operating to calculate the flow rate of the fluid to be measured by integral operation based on the inner wall position calculated at said inner wall position calculation step by said flow rate operation means.

5. A method of flow rate measurement using an ultrasonic flowmeter to measure a flow rate of a fluid to be measured, comprising:

an ultrasonic transmitter for launching ultrasonic pulses of a predetermined frequency into the fluid to be measured in fluid pipe from an ultrasonic transducer along a measuring line;

a flow velocity distribution measuring means for measuring flow velocity distribution of the fluid to be measured in a measurement region by receiving ultrasonic echoes reflected from the measurement region among the ultrasonic pulses incident into the fluid to be measured; and

a flow rate operation means for calculating a flow rate of the fluid to be measured in the measurement region based on the flow velocity distribution of said fluid to be measured, and

by said flow velocity distribution measuring means, the method comprising the steps of:

graph outputting to output a flow velocity distribution graph displaying the flow velocity distribution in two axes of positions in the inner diameter direction of the fluid pipe relating to the measuring line and fluid velocities corresponding to the inner diameter direction;

manual input data receiving to receive manual input data regarding the inner wall position with respect to the axis in the inner diameter direction;

inner wall position calculating to calculate the inner wall position with respect to the axis in the inner diameter direction based on the manual input data received at the manual input data receiving step; and

flow rate operating to calculate the flow rate of the fluid to be measured by integral operation based on the inner wall position calculated at said inner wall position calculation step by said flow rate operation means.

6. A computer program product executing to control an ultrasonic flowmeter to measure a flow rate of a fluid to be measured, comprising:

an ultrasonic transmitter for launching ultrasonic pulses of a predetermined frequency into the fluid to be measured in a fluid pipe from an ultrasonic transducer along a measuring line;

a flow velocity distribution measuring means for measuring flow velocity distribution of the fluid to be measured in a measurement region by receiving ultrasonic echoes reflected from the measurement region among the ultrasonic pulses incident into the fluid to be measured; and

a flow rate operation means for calculating a flow rate of the fluid to be measured in the measurement region based on the flow velocity distribution of said fluid to be measured,

wherein said computer program product makes the ultrasonic flowmeter execute the steps of:

graph outputting to output a flow velocity distribution graph displaying the flow velocity distribution in two axes of positions in the inner diameter direction of the fluid pipe relating to the measuring line and fluid velocities corresponding to the inner diameter direction by the flow velocity distribution measuring means;

inner wall position calculating to calculate the inner wall position with respect to the axis in the inner diameter direction by calculating the inflection point from the fluid velocity distribution graph outputted at the graph outputting step; and

flow rate operating to calculate the flow rate of the fluid to be measured by integral operation based on the inner wall position calculated at the inner wall position calculation step.

7. A computer program product to control an ultrasonic flowmeter to measure a flow rate of a fluid to be measured, comprising:

an ultrasonic transmitter for launching ultrasonic pulses of a predetermined frequency into the fluid to be measured in a fluid pipe from an ultrasonic transducer along a measuring line;

a flow velocity distribution measuring means for measuring flow velocity distribution of the fluid to be measured in a measurement region by receiving ultrasonic echoes reflected from the measurement region among the ultrasonic pulses incident into the fluid to be measured; and

a flow rate operation means for calculating a flow rate of the fluid to be measured in the measurement region based on the flow velocity distribution of said fluid to be measured,

wherein said computer program product makes the ultrasonic flowmeter execute the steps of:

graph outputting to output a flow velocity distribution graph displaying the flow velocity distribution in two axes of positions in the inner diameter direction of the fluid pipe relating to the measuring line and fluid velocities corresponding to the inner diameter direction by the flow velocity distribution measuring means;

manual input data receiving to receive manual input data regarding the inner wall position with respect to the axis in the inner diameter direction;

inner wall position calculating to calculate an inner wall position with respect to the axis in the diameter direction; and

flow rate operating to calculate the flow rate of the fluid to be measured by integral operation based on the inner wall position calculated at the inner wall position calculation step.

# F I G.  1

DOPPLER ULTRASONIC FLOWMETER

ULTRASONIC TRANSMITTING AND RECEIVING MEANS

ULTRASONIC TRANSDUCER

FLUID PIPE

FLUID TO BE MEASURED

ULTRASONIC PULSE

ULTRASONIC ECHO

ECHO RECEIVER

ULTRASONIC ECHO

FLUID VELOCITY DISTRIBUTION MEASURING MEANS

INNER WALL POSITION DATA

FLOW RATE OPERATION MEANS

FLUID VELOCITY DISTRIBUTION

MEASURER

VISUAL INSPECTION OF GRAPH

GRAPH OUTPUT MEANS

CALCULATED FLOW RATE DATA

INNER WALL POSITION CALCULATING MEANS

CALCULATED FLOW RATE DATA OUTPUT MEANS

MANUAL INPUT OF CORRECTION DATA

MANUAL INPUT DATA RECEIVER

CORRECTION DATA OF INNER WALL POSITION

OUTPUT MEANS (MONITOR)

# FIG. 2

# FIG. 3

FLUID
VELOCITY
(V)

MEASURING LINE

0

CALCULATING POSITION BY
INNER WALL POSITION CALCULATING MEANS

CORRECTING POSITION BY
MANUAL INPUT DATA

EP 1 701 139 A1

F I G. 4

## F I G. 5

**INTERNATIONAL SEARCH REPORT**

| International application No. |
| --- |
| PCT/JP2004/019432 |

| A. CLASSIFICATION OF SUBJECT MATTER |
| --- |
| Int.Cl$^7$  G01F1/66 |
| According to International Patent Classification (IPC) or to both national classification and IPC |

| B. FIELDS SEARCHED |
| --- |
| Minimum documentation searched (classification system followed by classification symbols)<br>    Int.Cl$^7$  G01F1/00-9/02 |

| Documentation searched other than minimum documentation to the extent that such documents are included in the fields searched |
| --- |
| Jitsuyo Shinan Koho          1922–1996   Toroku Jitsuyo Shinan Koho   1994–2005<br>Kokai Jitsuyo Shinan Koho    1971–2005   Jitsuyo Shinan Toroku Koho   1996–2005 |

| Electronic data base consulted during the international search (name of data base and, where practicable, search terms used) |
| --- |

C. DOCUMENTS CONSIDERED TO BE RELEVANT

| Category* | Citation of document, with indication, where appropriate, of the relevant passages | Relevant to claim No. |
| --- | --- | --- |
| A | JP 2003-130699 A  (The Tokyo Electric Power Co., Inc.),<br>08 May, 2003 (08.05.03),<br>Full text; all drawings<br>(Family: none) | 1-7 |
| A | JP 10-281832 A  (Hitachi, Ltd.),<br>23 October, 1998 (23.10.98),<br>Full text; all drawings<br>(Family: none) | 1-7 |
| A | JP 62-19854 B  (Masanobu HOGAKI),<br>01 May, 1987 (01.05.87),<br>Full text; all drawings<br>(Family: none) | 1-7 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    17 January, 2005 (17.01.05) | Date of mailing of the international search report<br>    01 February, 2005 (01.02.05) |
| --- | --- |
| Name and mailing address of the ISA/<br>    Japanese Patent Office | Authorized officer |
| Facsimile No. | Telephone No. |

Form PCT/ISA/210 (second sheet) (January 2004)

**INTERNATIONAL SEARCH REPORT**

| | International application No. |
|---|---|
| | PCT/JP2004/019432 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-97742 A (The Tokyo Electric Power Co., Inc.), 07 April, 2000 (07.04.00), Full text; all drawings (Family: none) | 1-7 |

Form PCT/ISA/210 (continuation of second sheet) (January 2004)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000097742 A

- JP 2003344131 A